# EUROPEAN PATENT SPECIFICATION

(11) **EP 0 738 969 B1**
(45) Date of publication and mention of the grant of the patent: **13.06.2007**
(21) Application number: 95116293.2
(22) Date of filing: 16.10.1995
(51) Int. Cl.: G06F 9/445, G06F 9/44, G06F 11/14

(54) **System starter unit and method**
Startverfahren und Einrichtung
Procédé et unité de démarrage d'un système

(30) Priority: 18.04.1995 JP 11655095
(43) Date of publication of application: 23.10.1996
(73) Proprietor: FUJI XEROX CO., LTD., Minato-ku Tokyo 107 (JP)
(72) Inventor: Nohara, Arito, c/o Fuji Xerox Co.,Ltd., Takatsu-ku, Kawasaki-shi, Kanagawa (JP)
(74) Representative: Grünecker, Kinkeldey, Stockmair & Schwanhäusser Anwaltssozietät

(56) References cited:
- C.J. DATE: "Introduction to Database system, Vol. 2" 1991 , ADDISON WESLEY , READING, MA, USA XP002029747 * Par. 1.3 Transaction failures, Par 1.4 System failures, page 9 - page 17 *

## Description

### FIELD OF THE INVENTION

The present invention relates to a system starter unit and method, in particular to a system starter unit and method applied to a multi-tasking system. The present invention further relates to a computer program product executable by means of a computer and controlling the computer to execute the aforementioned system starter unit and method.

### BACKGROUND OF THE INVENTION

As an example of a conventional system starter unit, there are the units disclosed in Japanese Patent Publication No. Hei. 6-289948 and Japanese Patent Publication No. Hei. 6-35718. In the system restart unit disclosed in Japanese Patent Publication Hei. 6-289948, when the power supply is switched on, the concluded state of the system is detected by an end detection means, and a system state clearing process means clears the state of a CPU, memory and control means before being switched off to a nonvolatile memory. This state is monitored by a state clearing monitor means, a clearing confirmation discrimination means is started when a predetermined state occurs, and the user is prompted to input whether state clearing is to be continued or not. When the user terminates state clearing, the state clearing is terminated by a state clearing termination means and the system is returned to the state prior to the switching off of the power supply.

In the system degeneration mode for times of system abnormalities disclosed in Japanese Patent Publication No. Hei. 6-35718, although each task is monitored by a monitoring task and the system is reset and restarted when a notification of functioning does not arrive from a task, at that time the name and abnormal operation frequency of the task for which the notification of functioning has not arrived are written into a table and thereafter, when an initialization task starts the relevant system, with reference to the table, tasks whose abnormal operation frequency is high are not started. Also with respect to other tasks related to the relevant task starting is not performed by referring to a task relationship table. According to this type of structure, although the system itself degenerates due to disengagement of given defective tasks, the reset frequency of the system is reduced and continuous operation of the system is performed.

Either of the conventional system starter units described above are constructed so that, the states of the tasks etc. at the time of system termination are stored. And the system is restarted, the system is restarted by reading out the stored states. In particular, according to the second system starter unit described in Japanese Patent Publication Hei. 6-35718, although it is constructed so that tasks in which defects exist are disengaged upon resetting, tasks which are terminated for whatever reason or tasks which are terminated by user instructions prior to resetting are restarted and thereby the started system becomes unstable. Also, where tasks which have been terminated by a user instruction are restarted, the user must again perform an instruction for terminating the relevant tasks, for which reason there is the disadvantage that this incurs extra time and effort.

### SUMMARY OF THE INVENTION

An object of the present invention is to provide a system starter unit and method in which, when a terminated system is restarted, as well as starting of the system being performed stably with the state prior to termination being accurately reflected, the content of the user's instructions prior to termination are maintained. Another object of the present invention is to provide a system starter unit and method in which, when the system is started, the starting time is shortened, starting irregularities are prevented, modifications of structural states according to the user's instructions after starting can be simplified, and modifications of structural states can be controlled based on modifications of the states of the tasks themselves during starting. Still another object of the present invention is to provide a computer program product executable by means of a computer and controlling the computer to execute the aforementioned system starter unit and method.

According to a first aspect of the invention, there is provided a system starter unit for use in a multi-task system for simultaneously executing a plurality of tasks, comprising: task information memory means for storing the information of each of the plurality of tasks; task state memory means for storing the state relating to the execution and termination of each of the plurality of tasks; and an initialization task for, when starting the system, reading the stored information of the task information memory means and the stored state of the task state memory means, and executing tasks in the execution state and not executing tasks in the termination state, with reference to the state relating to the execution and termination during the previous system termination of each of the plurality of tasks necessary for the system and based on the information from the task information storing means.

The system starter unit according to the first aspect of the invention further comprises a control task for, after the system is started, controlling the tasks to be executed and editing the stored state of the task state memory means.

In the system starter unit according to the first aspect of the invention, the control task receives the end notification from the tasks during execution and modifies the stored state of the task state memory means.

In the system starter unit according to the first aspect of the invention, the control task receives an instruction from a client to execute or terminate each of the plurality of tasks, and as well as executing or terminating tasks according to the instruction, modifies the stored state of the task state memory means.

According to a second aspect of the invention, there is provided a system starting method for use in a multi-task system for simultaneously executing a plurality of tasks, comprising: a step of storing the information of each of the plurality of tasks; a step of storing the state relating to the execution and termination of each of the plurality of tasks; and an initialization step of, when starting the system, reading the stored information of the tasks and the stored state relating to the execution and termination of the tasks, and executing tasks in a execution state and not executing tasks in a termination state, with reference to the state relating to the execution and termination during the previous system termination of each of the plurality of tasks necessary for the system and based on the information of the tasks.

According to a third aspect of the invention, there is provided a computer program product, executable by means of a computer, for starting a multi-task system and controlling the computer, comprising program code means of: means for storing the information of each of the plurality of tasks; means for storing the state relating to the execution and termination of each of the plurality of tasks; and initialization means for, when starting the system, reading the stored information of the tasks and the stored state relating to the execution and termination of the tasks, and executing tasks in the execution state and not executing tasks in the termination state, with reference to the state relating to the execution and termination during the previous system termination of each of the plurality of tasks necessary for the system and based on the information of the tasks.

### BRIEF DESCRIPTION OF THE DRAWINGS

These and other features, aspects and advantages of the present invention will become better understood with reference to the following description, appended claims and accompanying drawings, in which:
Fig. 1 is a structural view of a system including the system starter unit according to the present invention;
Fig. 2 shows an example of the content of a task table;
Fig. 3 shows an example of the content of a state table;
Fig. 4 is a flow chart showing the flow of processing during starting of the system;
Fig. 5 is a flow chart showing the flow of request processing from the user; and
Fig. 6 is a flow chart showing the flow of processing during task termination.

### DETAILED DESCRIPTION OF THE INVENTION

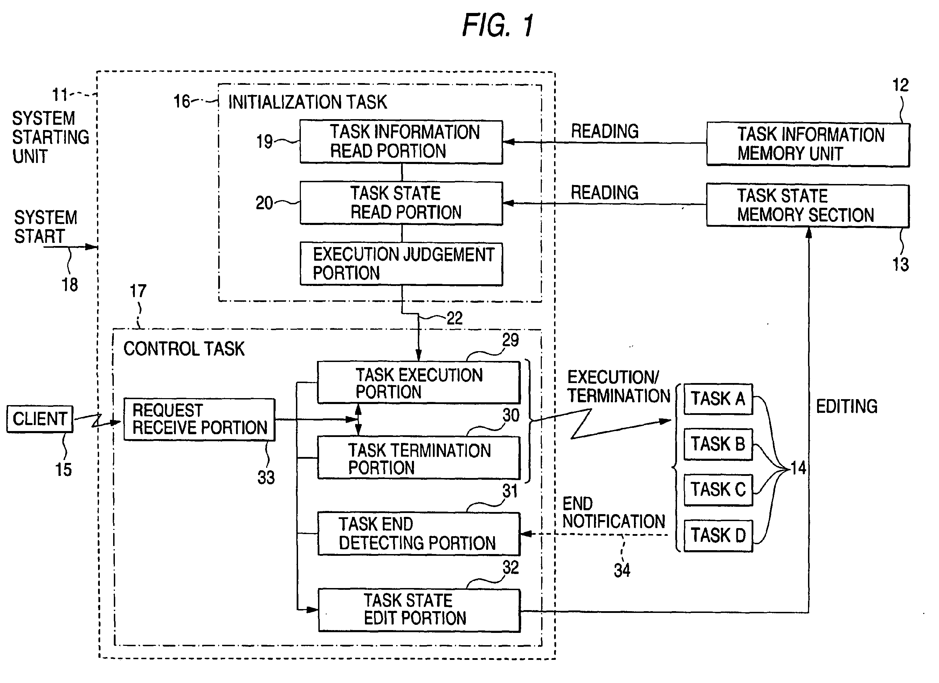

Hereafter, embodiments of the present invention will be explained based on the enclosed Figs. 1 to 6.

The structure and basic functions of a representative embodiment of the system starter unit according to the present invention will be explained with reference to Figs. 1 to 3. The system comprising the system starter unit 11 according to the present embodiment, as shown in Fig. 1, is formed by the system starter unit 11, a task information memory section 12, a task state memory section 13 and a plurality of tasks 14 executed as applications. This system operates on a multi-task OS (operating system). The system shown in Fig. 1 can operate a maximum of, for example, four tasks 14 (tasks A to D) as applications. "A" to "D" are task identifiers relating to the tasks 14. The tasks which actually operate in an operation state of the system are determined based on state data stored in the task state memory section 13. This system also receives data for various requests from a user, i.e. client, 15. As examples of requests, there are execution and termination requests for each task 14.

The system starter unit 11 is formed by an initialization task 16 and a control task 17. The initialization task 16 and control task 17 are processes which are executed at the beginning of the system start time. The system starter unit 11, upon receiving a command 18 for starting the system from an external unit, executes the initialization task 16 and control task 17.

The initialization task 16 is formed by a task information read portion 19 for reading task information stored in the task information memory section 12, a task state read portion 20 for reading task states stored in the task state memory section 13, and an execution judgment portion 21. In the initialization task 16, when the system is started, the information of each task (program name etc.) is read from the task information memory section 12 by the task information read portion 19, and a state specifying execution or termination of each task is read from the task state memory section 13 by the task state read portion 20. The execution judgment portion 21 judges the state of each task as read, and transmits a task execution request 22 to the control task 17 for executing only those tasks which it judges should be executed.

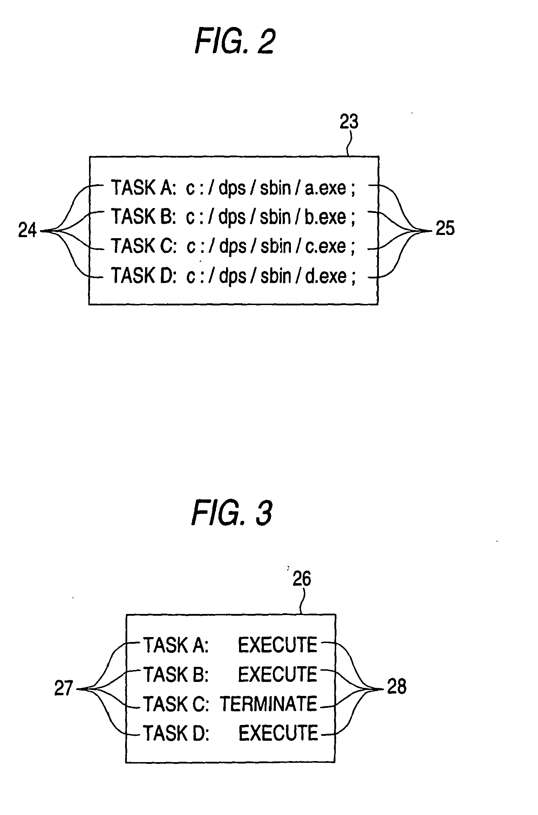

The task information memory section 12 stores a task table 23 such as that shown in Fig. 2 for example. Task names 24 ("task A" to "task D") and program names 25 of processes to be actually executed in the task are stored in the task table 23 for each task. The task state memory section 13 stores a state table 26 such as that shown in Fig. 3 for example. Task names 27 and states 28 ("execution" and "termination") of the tasks are stored in the state table 26 for each task.

The control task 17, as shown in Fig. 1, is formed by a task execution portion 29, a task termination portion 30, a task end detection portion 31, a task state edit portion 32, and a request receive portion 33.

The request receive portion 33 receives an execution request or a termination request for each task from the client 15 after the system is started, and sends these requests to the task execution portion 29 or the task termination portion 30.

The task execution portion 29 executes the tasks for which execution has been requested, based on the previously described task execution request 22 enacted from the execution judgment portion 21 of the initialization task 16 or the execution request from the request receive portion 33, and further, sends a task state modification request to the task state edit portion 32 to perform modification of task states only with respect to tasks which have been executed based on the execution request from the request receive portion 33. When the system is started, the task execution portion 29 executes tasks 14 only by means of the execution request enacted from the execution judgment portion 21 of the initialization task 16. Accordingly, when the system is started, the task 14 to be executed is determined based on the task states stored in the state table 26. In the present embodiment, as shown in Fig. 3, since tasks A, B and D are designated "execute" and task C is designated "terminate", tasks A, B and D are executed and task C is not executed. After the system is started the operating state of each task 14 is controlled based on a request received by the request receive portion 33. After system start, with regard to tasks executed by an execution request from the client 15, as well as the tasks being executed by the task execution portion 29, the content of the task state memory section 13, i.e. content relating to the states of the state table 26, is modified via the task state edit portion 32. In the case of the present embodiment, the possibility of terminated task C being executed and the designation "terminate" relating to task C in the state table 26 being changed to "execute" can be considered.

The task termination portion 30 terminates tasks for which termination has been requested based on a termination request from the request receive portion 33, and sends a task state modification request to the task state edit portion 32 to perform modification of task states with respect to tasks which have been terminated based on the termination request from the request receive portion 33. After system start, with regard to tasks to be terminated by a termination request from the client 15, as well as the tasks on which termination processing is performed by the task termination portion 30, the content of the task state memory section 13, i.e. content relating to the states of the state table 26, is modified via the task state edit portion 32.

The task end detection portion 31, in cases where tasks occur among the tasks 14 which end during execution thereof, as well as detecting conclusion of such tasks based on an end notification 34, sends a task state modification request to the task state edit portion. After system start, with regard to tasks which end in task circumstances, it receives end notification thereof, and the content of the task state memory section 13, i.e. content relating to the states of the state table 26, is modified via the task state edit portion 32.

The task state edit portion 32, as described above, receives task state modification requests from any one of the task execution portion 29, the task termination portion 30 and the task end detection portion 31, and modifies the state content of the state table 26 of the task state memory section 13 relating to tasks designated by the request based on the request content.

Next, the operation of a system starting unit having the above-described structure will be explained.

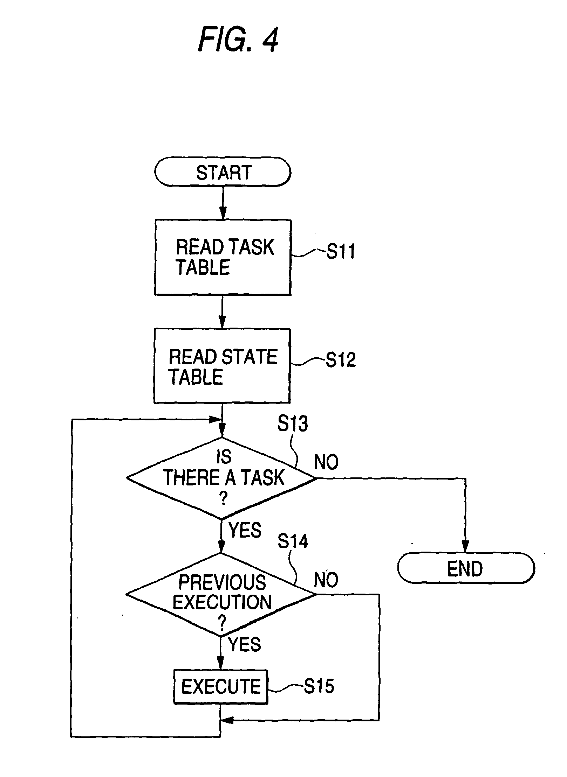

Referring to Fig. 4, the flow of processes where starting after the system has been terminated for whatever reason is performed will be explained. When a system start command 18 is enacted on the system starter unit 11, the task table 23 of the task information memory section 12 is read by the task information read portion 19 of the initialization task 16 (step S11), and subsequently, the state table 26 of the task state memory section 13 is read by the task state read portion 20 of the initialization task 16 (step S12). Next, in the execution judgment portion 21 of the initialization task 16, the tasks to be executed are determined with reference to the read state table 26 and the determined tasks are executed based on the task table 23. In short, firstly it is judged whether or not tasks are included in the state table 26 (step S13). According to the state table 26 shown in Fig. 3, since tasks A to D are included, this is determined as "tasks exist" and firstly task A is read and it is judged whether the state thereof is "execute" or "terminate" (step S13). Since according to the state table 26 task A is "execute", the process of task A is executed according to the program name for task A in the information table 23 (step S15). The execution process for the process of task A in step S15 is executed by the task execution portion 29 which receives a task execution request 22 from the execution judgment portion 21. Next, steps S13 to S15 are executed with respect to task B in the same manner as for task A. Although tasks S13 and S14 are also executed for task C, since task C is "terminate", step S15 for execution is not executed and the operation returns to step S13. Steps S13 to S15 are executed similarly to tasks A and B with respect to task D. Thereafter, in the execution of step S13, since no more tasks exist in the state table 26, it is taken as "no tasks" and the end process is performed.

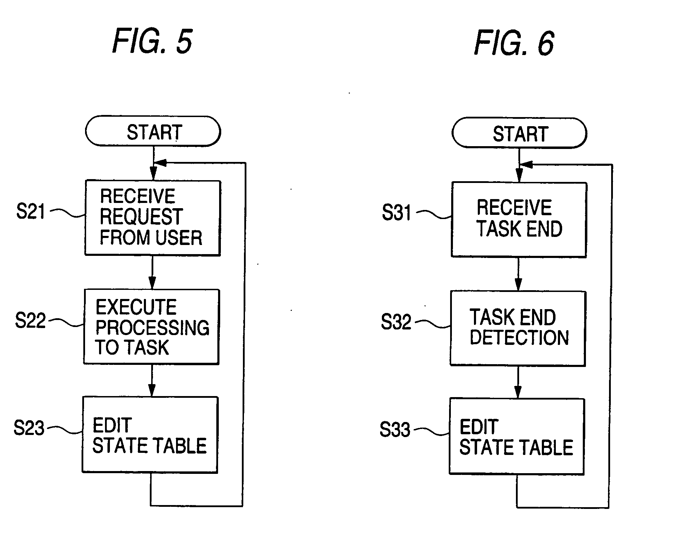

Next, with reference to Fig. 5, the flow of the process in the case where there is an execution or terminate request from a user, i.e. client, will be explained. When starting of the system ends, the control task 17 enters a state where it awaits a request from the user. In the first step S21, the request receive portion 33 awaits transmission of an execution request or termination request from the client 15. When the request receive portion 33 receives an execution request with respect to a given request (in the present embodiment, task C for example), as well as the request receive portion 33 sending an execution request to the task execution portion 29 and executing the relevant task (step S22), the task state edit portion 32 receives a task state modification request from the task execution portion 29 and changes the content of the above executed task in the state table 26 from "terminate" to "execute" (step S23). Then again the operation returns to S21 and waits for a new request from the client 15. Also, when the request receive portion 33 receives a termination request with respect to a given task (in the present embodiment, task A for example), as well as the request receive portion 33 sending a termination request to the task termination portion 30 and terminating the relevant task (step S22), the task state edit portion 32 receives a task state modification request from the task termination portion 30 and changes the content of the above terminated task in the state table 26 from "execute" to "terminate" (step S23). Then the operation again returns to S21 and waits for a new request from the client 15.

Next, with reference to Fig. 6, the flow of the process where there is an end notification from the task 14 under execution will be explained. When the starting of the system ends, the control task 17 enters a state awaiting conclusion from the tasks 14 under execution. Firstly in step S31, the task end detection portion 31 awaits transmission of a end notification 34 with respect to any of the tasks 14 under execution. When the task end detection portion 31 receives an end notification output from any of the tasks (step S32), it sends a task state modification request to the task state edit portion 32. The task state edit portion 32 which receives the task state modification request changes the state of the corresponding task in the state table 26 from "execute" to "terminate". Thereafter the operation returns to step S31 and awaits an end notification from the tasks 14 under execution.

According to the present invention, as is clear from the above explanation, in the system starter unit and method, when a terminated system which is again started, as well as starting of the system being performed stably with the state prior to termination being accurately reflected, the content of the user's instructions prior to termination can be maintained, and further, when the system is started the starting time is shortened, starting irregularities are prevented, and in addition modifications of structural states according to the user's instructions after starting can be simplified and modifications of structural states can be controlled based on modifications of the states of the tasks themselves during starting.

Furthermore, the present invention can be applied to a computer program product exectable by means of a computer. The aforementioned effects will be accomplished by using this computer program product.

## Claims

1. A system starter unit for use in a multi-task system for simultaneously executing a plurality of tasks, comprising:
task information memory means for storing the information of each of said plurality of tasks (14);
task state memory means for storing the state relating to the execution and termination of each of said plurality of tasks (14); and
an initialization task (16) for, when starting said system, reading said stored information of said task information memory means and said stored state of said task state memory means, and executing tasks (14) in the execution state and not executing tasks (14) in the termination state, with reference to said state relating to the execution and termination during the previous system termination of each of said plurality of tasks (14) necessary for said system and based on said information from said task information storing means.

2. The system starter unit according to claim 1, further comprising a control task (17) for, after said system is started, controlling said tasks (14) to be executed and editing said stored state (28) of said task state memory means.

3. The system starter unit according to claim 2, wherein said control task receives the end notification (34) from said tasks (14) during execution and modifies said stored state (28) of said task state memory means.

4. The system starter unit according to claim 2, wherein said control task (17) receives an instruction from a client(15) to execute or terminate each of said plurality of tasks (14), and as well as executing or terminating tasks (14) according to the instruction, modifies said stored state (28) of said task state memory means.

5. A system starting method for use in a multi-task system for simultaneously executing a plurality of tasks (14), comprising:
a step of storing the information of each of said plurality of tasks (14);
a step of storing the state (28) relating to the execution and termination of each of said plurality of tasks (14); and
an initialization step of, when starting said system, reading said stored information (27) of said tasks and said stored state (28) relating to the execution and termination of said tasks, and executing tasks in a execution state and not executing tasks in a termination state, with reference to said state (28) relating to the execution and termination during the previous system termination of each of said plurality of tasks necessary (14) for said system and based on said information of said tasks (14).

6. A computer program product, executable by means of a computer, for starting a multi-task system and controlling said computer, comprising program code means of:
means for storing the information of each of said plurality of tasks (14);
means for storing the state (28) relating to the execution and termination of each of said plurality of tasks (14); and
initialization means for, when starting said system, reading said stored information (27) of said tasks and said stored state (28) relating to the execution and termination of said tasks (14), and executing tasks in the execution state and not executing tasks in the termination state, with reference to said state (28) relating to the execution and termination during the previous system termination of each of said plurality of tasks (14) necessary for said system and based on said information of said tasks (14).

## Patentansprüche

1. System-Starteinheit zum Einsatz in einem Multi-Prozess-System zum gleichzeitigen Ausführen einer Vielzahl von Prozessen, die umfasst:
eine Prozessinformations-Speichereinrichtung zum Speichern der Informationen jeder der Vielzahl von Prozessen (14);
eine Prozesszustand-Speichereinrichtung zum Speichern des Zustandes bezüglich der Ausführung und Beendigung jeder der Vielzahl von Prozessen (14); und
einen Initialisierungsprozess (16), der, wenn das System gestartet wird, die gespeicherten Informationen der Prozessinformations-Speichereinrichtung und den gespeicherten Zustand der Prozesszustand-Speichereinrichtung liest und unter Bezugnahme auf den Zustand bezüglich der Ausführung und Beendigung jeder der Vielzahl von für das System erforderlichen Prozessen (14), während der vorangegangenen Beendigung des Systems und auf Basis der Informationen von der Prozess-Informations-Speichereinrichtung Prozesse (14) in dem Ausführungszustand ausführt und Prozesse (14) in dem Beendigungszustand nicht ausführt.

2. System-Starteinheit nach Anspruch 1, die des Weiteren einen Steuer-Prozess (17) umfasst, der, nachdem das System gestartet ist, die auszuführenden Prozesse (14) steuert und den gespeicherten Zustand (28) der Prozesszustand-Speichereinrichtung editiert.

3. System-Starteinheit nach Anspruch 2, wobei der Steuer-Prozess die Beendigungs-Mitteilung (34) von den Prozessen (14) während der Ausführung empfängt und den gespeicherten Zustand (28) der Prozesszustand-Speichereinrichtung modifiziert.

4. System-Starteinheit nach Anspruch 2, wobei die Steuer-Prozess (17) einen Befehl von einem Client (15) zum Ausführen oder Beenden jeder der Vielzahl von Prozessen (14) empfängt und neben dem Ausführen oder Beenden von Prozessen (14) gemäß dem Befehl den gespeicherten Zustand (28) der Prozesszustand-Speichereinrichtung modifiziert.

5. System-Startverfahren zum Einsatz in einem Multi-Prozess-System zum gleichzeitigen Ausführen einer Vielzahl von Prozessen (14), das umfasst:
einen Schritt des Speicherns der Informationen jeder der Vielzahl von Prozessen (14);
einen Schritt des Speicherns des Zustandes (28) bezüglich der Ausführung und Beendigung jeder der Vielzahl von Prozessen (14); und
einen Initialisierungsschritt, mit dem, wenn das System gestartet wird, die gespeicherten Informationen (27) der Prozesse und der gespeicherte Zustand (28) bezüglich der Ausführung und Beendigung der Prozesse gelesen werden und unter Bezugnahme auf den Zustand (28) bezüglich der Ausführung und Beendigung jeder der Vielzahl von für das System erforderlichen Prozessen (14) während der vorangegangenen Beendigung des Systems und auf Basis der Informationen der Prozesse (14) Prozesse in einem Ausführungszustand ausgeführt werden und Prozesse in einem Beendigungszustand nicht ausgeführt werden.

6. Computerprogrammerzeugnis, das mittels eines Computers ausgeführt werden kann, um ein Multi-Prozess-System zu starten und den Computer zu steuern, wobei es folgende Programmcodemittel umfasst:
Mittel zum Speichern der Informationen jeder der Vielzahl von Prozessen (14);
Mittel zum Speichern des Zustandes (28) bezüglich der Ausführung und Beendigung jeder der Vielzahl von Prozessen (14); und
Initialisierungsmittel, mit denen, wenn das System gestartet wird, die gespeicherten Informationen (27) der Prozesse und der gespeicherte Zustand (28) bezüglich der Ausführung und Beendigung der Prozesse (14) gelesen werden und unter Bezugnahme auf den Zustand (28) bezüglich der Ausführung und Beendigung jeder der Vielzahl von für das System erforderlichen Prozessen (14) während der vorangegangenen Beendigung des Systems und auf Basis der Informationen der Prozesse (14) Prozesse in dem Ausführungszustand ausgeführt werden und Prozesse in dem Beendigungszustand nicht ausgeführt werden.

## Revendications

1. Unité de démarrage de système à utiliser dans un système multitâche destiné à exécuter simultanément une pluralité de tâches, comprenant :
un moyen de mémoire d'informations de tâche destiné à mémoriser les informations de chaque tâche de ladite pluralité de tâches (14),
un moyen de mémoire d'état de tâche destiné à mémoriser l'état se rapportant à l'exécution et à l'arrêt de chaque tâche de ladite pluralité de tâches (14), et
une tâche d'initialisation (16) destinée à, lors du démarrage dudit système, lire lesdites informations mémorisées dudit moyen de mémoire d'informations de tâche et ledit état mémorisé dudit moyen de mémoire d'état de tâche, et à exécuter des tâches (14) dans l'état d'exécution et à ne pas exécuter des tâches (14) dans l'état d'arrêt, en faisant référence audit état se rapportant à l'exécution et à l'arrêt au cours de l'arrêt du système précédent de chaque tâche de ladite pluralité de tâches (14) nécessaires pour ledit système et sur la base desdites informations provenant dudit moyen de mémoire d'informations de tâche.

2. Unité de démarrage de système selon la revendication 1, comprenant en outre une tâche de commande (17) destinée à, après que ledit système a été démarré, commander lesdites tâches (14) pour qu'elles soient exécutées et éditer ledit état mémorisé (28) dudit moyen de mémoire d'état de tâche.

3. Unité de démarrage de système selon la revendication 2, dans laquelle ladite tâche de commande reçoit la notification de fin (34) desdites tâches (14) au cours d'une exécution et modifie ledit état mémorisé (28) dudit moyen de mémoire d'état de tâche.

4. Unité de démarrage de système selon la revendication 2, dans laquelle ladite tâche de commande (17) reçoit une instruction d'un client (15) pour exécuter ou arrêter chaque tâche de ladite pluralité de tâches (14), et en même temps que l'exécution ou l'arrêt des tâches (14) conformément à l'instruction, modifie ledit état mémorisé (28) dudit moyen de mémoire d'état de tâche.

5. Procédé de démarrage de système à utiliser dans un système multitâche destiné à exécuter simultanément une pluralité de tâches (14), comprenant :
une étape de mémorisation des informations de chaque tâche de ladite pluralité de tâches (14),
une étape de mémorisation de l'état (28) se rapportant à l'exécution et à l'arrêt de chacune de ladite pluralité de tâches (14), et
une étape d'initialisation consistant à, lors du démarrage dudit système, lire lesdites informations mémorisées (27) desdites tâches et ledit état mémorisé (28) se rapportant à l'exécution et à l'arrêt desdites tâches, et à exécuter des tâches dans un état d'exécution et ne pas exécuter des tâches dans un état d'arrêt, en faisant référence audit état (28) se rapportant à l'exécution et à l'arrêt au cours de l'arrêt du système précédent de chaque tâche de ladite pluralité de tâches (14) nécessaires pour ledit système et sur la base desdites informations desdites tâches (14).

6. Produit de programme informatique, exécutable au moyen d'un ordinateur, destiné à démarrer un système multitâche et à commander ledit ordinateur, comprenant un moyen de code de programme constitué de :
un moyen destiné à mémoriser les informations de chaque tâche de ladite pluralité de tâches (14),
un moyen destiné à mémoriser l'état (28) se rapportant l'exécution et à l'arrêt de chacune de ladite pluralité de tâches (14), et
un moyen d'initialisation destiné à, lors du démarrage dudit système, lire lesdites informations mémorisées (27) desdites tâches et ledit état mémorisé (28) se rapportant à l'exécution et à l'arrêt desdites tâches (14), et à exécuter des tâches (14) dans l'état d'exécution et à ne pas exécuter des tâches (14) dans l'état d'arrêt, en faisant référence audit état (28) se rapportant à l'exécution et à l'arrêt au cours de l'arrêt du système précédent de chacune de ladite pluralité de tâches (14) nécessaires pour ledit système et sur la base desdites informations desdites tâches (14).
